# EUROPÄISCHE PATENTSCHRIFT

(11) **EP 3 657 516 B1**
(45) Veröffentlichungstag und Bekanntmachung des Hinweises auf die Patenterteilung: **02.03.2022**
(21) Anmeldenummer: 18207593.7
(22) Anmeldetag: 21.11.2018
(51) Int. Cl.: H01B 1/22

(54) **VERBESSERTE EDELMETALL-PASTEN FÜR SIEBGEDRUCKTE ELEKTRODENSTRUKTUREN**
IMPROVED NOBLE METAL PASTES FOR SCREEN PRINTED ELECTRODE STRUCTURES
PÂTES DE MÉTAUX PRÉCIEUX AMÉLIORÉES POUR STRUCTURES D'ÉLECTRODES SÉRIGRAPHIÉES

(43) Veröffentlichungstag der Anmeldung: 27.05.2020
(73) Patentinhaber: Heraeus Nexensos GmbH, 63450 Hanau (DE)
(72) Erfinder: Dr. Nick, Christoph, 63571 Gelnhausen (DE); Dr. Asmus, Tim, 35469 Allendorf-Winnen (DE); Dietmann, Stefan, 63755 Alzenau (DE)
(74) Vertreter: Kilchert, Jochen

(56) Entgegenhaltungen:
- EP-A2- 0 071 928
- WO-A1-2013/003506
- US-A- 3 854 957

## Beschreibung

Die vorliegende Erfindung betrifft verbesserte Siebdruckpastenzusammensetzung zur Herstellung von elektrischen Leiteranordnungen, die auf partikulären Edelmetallen, Metalloxiden und/oder schnellen Binde- und/oder Lösungsmitteln basieren, in denen der Anteil der Metalloxide in der Siebdruckpastenzusammensetzung 5 bis 15 Gew.-%, bezogen auf die Gesamtmenge an Edelmetall und Metalloxiden, beträgt, und wobei SiO₂, Al₂O₃ und BaO einen Anteil von mindestens 60 Gew.-% der metallischen Oxide in der Siebdruckpastenzusammensetzung ausmachen. Die vorliegende Erfindung betrifft weiterhin Verfahren zur Herstellung von elektrischen Leiteranordnungen unter Verwendung der angegebenen Siebdruckpastenzusammensetzungen, Verbundprodukte aus einem keramischen Substrat und einer nach dem Verfahren hergestellten elektrischen Leiteranordnung sowie (Russ)Partikelsensoren und Heizvorrichtungen.

### Stand der Technik

Bei Dieselpartikelfiltern muss der Partikelausstoß, insbesondere bei Fahrzeugen während des Fahrbetriebs, per gesetzlicher Vorschrift überwacht werden. Darüber hinaus ist eine Belastungsprognose von Dieselpartikelfiltern zur Regenerationskontrolle notwendig, um eine hohe Systemsicherheit bei wenigen effizienten, kraftstoffsparenden Regenerationszyklen zu gewährleisten und um kostengünstige Filtermaterialien einsetzen zu können.

Eine Möglichkeit hierzu bieten resistive Partikelsensoren, die ein Elektrodensystem mit mindestens zwei, dem Abgas frei ausgesetzten Elektroden aufweisen, an bzw. zwischen denen sich die zu detektierenden Partikel, in der Regel Rußpartikel, unter dem Einfluss eines angelegten elektrischen Feldes ablagern und zu einer Widerstands- und/oder Impedanzänderung führen. Solche resistiven Partikelsensoren werden heute in der Regel aus Platin hergestellt.

Um die Haftung der Elektroden auf einem Substrat zu verbessern und den Platingehalt und damit die Kosten zu senken, werden Elektroden zu Partikeldetektion meist aus einer Platin-Keramikmischung, beispielsweise umfassend Aluminiumoxid, Zirkoniumoxid, Yttriumoxid, Ceroxid, insbesondere alpha-Aluminiumoxid, hergestellt. Derartige Elektroden weisen jedoch eine in der Regel sehr poröse Struktur auf und damit eine besonders große für das Abgas zugängliche Oberfläche. Dies ist mit dem Nachteil verbunden, dass ab einer Temperatur von etwa 800°C Platin verstärkt zu Platindioxid (PtO₂) oxidiert und abgetragen wird, was eine allmähliche Verschlechterung der Sensorcharakteristik zur Folge hat.

Zur Lösung dieses Problems wurde in der DE 10 2008 041 707 A1 vorgeschlagen, entsprechende Elektroden aus einem Platin-Glas-Gemisch herzustellen, wobei das Platin und das Glas homogen in der Elektrode vorliegen und wobei das Glas eine Erweichungstemperatur von ≥ 1000°C aufweist. Durch einen solchen Elektrodenaufbau können Poren und Zwischenräume innerhalb der Elektrode minimiert, und so ein oxidativer Angriff auf das Platin deutlich erschwert werden. Zudem können die Elektroden unter Nutzung eines Siebdruckverfahrens hergestellt werden, wobei ein Gemisch der Materialien, aus denen die Elektroden gebildet werden, auf ein Keramiksubstrat aufgebracht wird. Durch anschließendes Erhitzen des Gemischs auf eine Temperatur oberhalb des Erweichungspunktes der Glasvorläufer werden dann die Elektroden hergestellt.

Als beispielhafte Glaszusammensetzungen werden in der DE 10 2008 041 707 A1 Gläser auf Basis von SiO₂/B₂O₃/Al₂O₃ beschrieben, die durch weitere Metalloxide, wie Kalziumoxid, Zinkoxid, Magnesiumoxid, Zirkonoxid und Bariumoxid ergänzt werden können. Nachteilig an solchen Gläser ist jedoch ihr signifikanter Anteil an B₂O₃, da die Borionen als Platingift wirken. Dies führt zu einer Beeinträchtigung der Stabilität der hergestellten Leiterbahnen bei hohen Temperaturen.

Die DE 198 42 276 A1 beschreibt eine Paste zum Verschweißen von Keramiken mit Metallen, bei der Platin-Partikel, Metalloxide wie Aluminiumoxid, Siliziumdioxid und Bariumoxid, und organische Bindemittel und Weichmacher zum Einsatz kommen. Die in der DE 198 42 276 A1 beschriebenen Zusammensetzungen weisen jedoch verhältnismäßig hohe Gehalte an oxidischen Materialien auf (über 20%, bezogen auf die Gesamtmenge an Platinmetalloxiden), was in einer für Partikeldetektoren unzureichende Leitfähigkeit resultiert.

Die US 2015/0203694 A1 beschreibt Pasten zur Ausbildung leitfähiger dicker Filme, die Platinpulver als leitfähigkeitsvermittelnden Bestandteil enthalten. Neben dem Platin können die in der US 2015/0203694 A1 beschriebenen Filmpasten bis zu 7% "Glasfritte" und 0 bis 3% anorganisches Oxid als enthalten. Die beispielhaft genannten Glasfrittematerialien weisen relativ hohe Anteile an B₂O₃ (etwa 35%) auf.

Die KR 20130107766 offenbart Elektrodenpastenzusammensetzungen mit 5 bis 20 Gew.-% anorganischem Bindemittel, 0,5 bis 20 Gew.-% organischem Bindemittel und 4,5 bis 20 Gew.-% organischem Lösungsmittel. Als anorganische Bindemittel sind spezifische Glaspulver mit einem Gehalt an B₂O₃ im Bereich von 9 bis 22% beschrieben, die entweder auf Bi₂O₃ oder PbO als Basismaterial beruhen (d.h., dieses Material bildet in Glas die größte Komponente).

< Neue Seite 3A > Ein Problem bekannter Siebdruckpasten zur Herstellung von leitfähigen Aufdrucken besteht auch in der oft nicht ausreichenden Substrathaftung, insbesondere bei erhöhten Temperaturen, was zu einer unerwünscht niedrigen Haltbarkeit von daraus hergestellten elektrischen Leiteranordnungen und insbesondere Partikelsensoren führt. Vor diesem Hintergrund bestand die Aufgabe der vorliegenden Erfindung darin, eine verbesserte Siebdruckpaste zur Herstellung von elektrischen Leiteranordnungen vorzuschlagen, die nach dem Aufbringen auf einen Keramikträger und nachfolgender thermischer Behandlung Elektroden- oder Leiterstrukturen liefert, die auch bei hohen Temperaturen verlässlich und langanhaltend auf dem Keramikträger haften.

### Beschreibung der Erfindung

Gemäß einem ersten Aspekt betrifft die vorliegende Erfindung damit eine Siebdruckpastenzusammensetzung zur Herstellung einer elektrischen Leiteranordnung, wobei die Siebdruckpastenzusammensetzung partikuläres Edelmetall umfassend Platin oder Palladium, Metalloxide, und organische Binde- und/oder Lösungsmittel enthält, wobei der Anteil der Metalloxide in der Siebdruckpastenzusammensetzung von 5 bis 15 Gew.-%, bezogen auf die Gesamtmenge an Edelmetall und Metalloxiden, beträgt und wobei SiO₂, Al₂O₃ und BaO einen Anteil von mindestens 60 Gew.-% der metallischen Oxide in der Siebdruckpastenzusammensetzung ausmachen.

Als besonders günstig kann ein Anteil der Metalloxide in der Siebdruckpastenzusammensetzung von 8 bis 15 Gew.-%, weiter bevorzugt 10 bis 14 Gew.-%, noch weiter bevorzugt 11 bis 13 Gew.-% und noch weiter bevorzugt etwa 12 Gew.-%, bezogen auf die Gesamtmenge an Edelmetall und Metalloxiden, angegeben werden.

Der Begriff "Edelmetall" bezeichnet im Kontext der vorliegenden Erfindung die Metalle Ru, Rh, Pd, Ag, Os, Ir, Pt, Au und Hg.

EP 0 071 928 A2 beschreibt eine Siebdruckpaste aus Palladium/Silber in Form metallischer Partikel, einem Bismuth-freien, niedrig schmelzenden, bei niedriger Viskosität entglasbaren Glas, sowie bis zu 18 Gew.-% eines organischen Bindemittels. Das entglasbare Glas in EP 0 071 928 A2 besteht zu wesentlichen Anteilen aus Pb₃O₄ (50-80%) und GeO₂ (10-30%). Zur Haftverbesserung kann der Zusammensetzung weiterhin 0,1 bis 10% eines Metalloxids zugesetzt werden, dass mit Al₂O₃ eine Spinellstruktur bildet.

US 3,854,957 A beschreibt eine Palladium/Silber-Paste mit bis zu 10% Nickeloxid und einem organischen Bindemittel. Durch den Nickeloxidzusatz soll die Anhaftung der Edelmetalle an ein Substrat verbessert werden. Ergänzend zu Nickeloxid wird der Zusatz eines Glasmaterials vorgeschlagen, das zu wesentlichen Anteilen aus Bi₂O₃ und PbO besteht und kleinere Anteile an B₂O₃ enthält.

WO 2013/003506 A1 beschreibt Dickfilmpasten mit Platin oder Platinlegierungen, die zusätzlich Anteile eines Oxids wie SiO₂ oder Al₂O₃ von bis zu 1 Gew.-% (als nicht metallische Phase) und ein organisches Bindemittel enthalten.

Das partikuläre Edelmetall, das in dieser Siebdruckpastenzusammensetzung zum Einsatz kommt, unterliegt keiner relevanten Beschränkung, mit der Maßgabe, dass das Edelmetall auch bei hohen Temperaturen (> 750°C) bei Sauerstoffkontakt möglichst stabil sein sollte, um die Stabilität einer daraus hergestellten elektrischen Leiteranordnung zu gewährleisten. Edelmetalle, die dieses Erfordernis erfüllen, sind insbesondere Platin, Legierungen aus Platin mit anderen Edelmetallen, insbesondere mit Rhodium, oder Silber/Palladium-Legierungen. Unlegiertes Platin hat gegenüber den erwähnten Legierungen aus Platin/Rhodium den Vorteil, dass es auch bei hohen Temperaturen nicht zur Ausbildung einer äußeren Oxidschicht kommt (im Fall von Platin/Rhodium eine Rhodiumoxidhaut), so dass das partikuläre Edelmetall im Kontext der vorliegenden Erfindung bevorzugt in Form von (unlegiertem) Platin vorliegt. Als "unlegiertes" Platin wird im Kontext dieser Erfindung ein Platin mit einer Reinheit von mindestens 99% und bevorzugt mindestens 99,5% bezeichnet.

Die Form des partikulären Edelmetalls unterliegt ebenfalls keinen relevanten Beschränkungen; es ist demzufolge möglich ist, sphärische Partikel, späroidische Partikel, Plättchen-förmige Partikel, etc. einzusetzen. Bevorzugt liegt das partikuläre Edelmetall jedoch in sphärischer Form vor.

Die Partikelgröße des Edelmetalls ist abhängig von der Applikation, für die Siebdruckpastenzusammensetzung eingesetzt werden soll. D.h. der maximale Durchmesser von in der Siebdruckpastenzusammensetzung vorliegenden Partikeln sollte möglichst kleiner sein als die Dicke einer daraus herzustellenden Leiterstruktur. Als besonders geeignete mittlere Partikelgröße D50 kann ein Bereich von 0,05 bis 10 µm, bevorzugt ein Bereich von 0,1 bis 5 µm und besonders bevorzugt 0,3 bis 2 µmangegeben werden. Die Partikelgröße ist in diesem Fall zweckmäßig mit Hilfe der Auswertung von Elektronenmikroskopischen Aufnahmen zu bestimmen.

Im Rahmen der vorliegenden Erfindung ganz besonders bevorzugt als partikuläres Edelmetall ist ein Platinpulver mit folgenden Eigenschaften: Platin Anteil: ≥99,7%, spezifische Oberfläche (BET): 0,8 - 1,2 m²/g, Partikelgrößenverteilung: D10: 0,2 - 0,5 µm, D50: 0,4 - 1,0 µm, D90: ≤ 2,5 µmund Pulverdichte: 9,0- 11,5 g/cm³.

"Metalloxide" bezeichnen im Kontext der vorliegenden Anmeldung Oxide von Metallen oder Halbmetallen, wie Silizium, die Sauerstoff als Gegenion enthalten. Die Metalloxide umfassen im Kontext der vorliegenden Erfindung jedoch vorzugsweise keine Boroxide, wie B₂O₃, da diese, wie vorstehend erwähnt, gegenüber Platin ein Katalysatorgift darstellen und damit die Funktionsfähigkeit von aus Siebdruckpastenzusammensetzungen hergestellten elektrischen Leiteranordnungen beeinträchtigen können. Demzufolge sollte der Gehalt an Boroxiden in den Metalloxiden bevorzugt ≤ 2 Gew.-%, besonders bevorzugt ≤ 1 Gew.-% betragen, wobei sich die Gewichtsanteile auf das Gesamtgewicht der Metalloxide in der Siebdruckpastenzusammensetzung beziehen. Ganz besonders bevorzugt ist es, wenn die Metalloxide außer unvermeidlichen Verunreinigungen keine Boroxide enthalten.

Die Metalloxide bzw. deren Gemisch werden zweckmäßig so ausgewählt, dass sie bei einer Temperatur im Bereich von 1000 bis etwa 1400°C erweichen, so dass in diesem Temperaturbereich ein "Sintern" zur Ausbildung eines einheitlichen Glaskörpers möglich ist. Im Kontext der vorliegenden Erfindung werden Gemische auf Basis von SiO₂, Al₂O₃ und BaO verwendet, die SiO₂, Al₂O₃ und BaO in einem Anteil von mindestens 60 Gew.-% enthalten. Bevorzugt ist ein Anteil von mindestens 70 Gew.-%, weiter bevorzugt mindestens 80 Gew.-% und noch weiter bevorzugt mindestens 90 Gew.-%, jeweils bezogen auf den Gesamtanteil der metallischen Oxide in der Siebdruckpastenzusammensetzung.

Im Rahmen der dieser Erfindung zugrundeliegenden Untersuchungen hat es sich gezeigt, dass ein verhältnismäßig hoher Gehalt an BaO in den Metalloxiden der Siedruckpastenzusammensetzung von Vorteil ist. So beträgt dieser Anteil bevorzugt mehr als 20 Gew.-%, insbesondere mehr als 30 Gew.-% und ganz besonders bevorugt mehr als 35 Gew.-%. Ein noch weiter bevorzugter Anteil an BaO liegt im Bereich von 40 bis 50 Gew.-%, insbesondere 40 bis 49 Gew.-%, noch weiter bevorzugt 42 bis 48 Gew.-% und meist bevorzugt etwa 45 Gew.-%.

Der Anteil an SiO₂ in den Gemischen auf Basis von SiO₂, Al₂O₃ und BaO sollte zweckmäßig 33 bis 43 Gew.-%, bevorzugt 33 bis 42 Gew.-%, weiter bevorzugt 35 bis 41 Gew.-%, und insbesondere etwa 38 Gew.-% betragen. Als geeigneter Anteil von Al₂O₃ kann ein Anteil zwischen 10 und 20 Gew.-%, bevorzugt 12 bis 18 Gew.-% und insbesondere etwa 15 Gew.-% angegeben werden. Bei diesen Angaben bezieht sich "Gew.-% "jeweils auf das Gesamtgewicht der Metalloxide in der Siebdruckpastenzusammensetzung.

Für die erfindungsgemäße Siebdruckpastenzusammensetzung ist es weiterhin bevorzugt, wenn sie einen möglichst geringen Anteil weiterer (d.h. von SiO₂, Al₂O₃ und BaO verschiedener) oxidischer Komponenten enthält, wobei ein geeigneter Gewichtsanteil für solche weiteren oxidischen Komponenten mit ≤ 2 Gew.-% und bevorzugt ≤ 1 Gew.-% angegeben werden kann. Zur Erzielung einer geeigneten Verarbeitbarkeit können der Siebdruckpastenzusammensetzung weitere Additive, wie organische Bindemittel, Lösungsmittel, Weichmacher, etc., zugesetzt werden. Als Beispiel für ein besonders geeignetes organisches Bindemittel kann unter anderem Ethylcellulose genannt werden, alternativ können aber auch Bindemittel wie Polyvinylbutyral, Hydroxycellulosen wie beispielsweise Hydroxypropylcellulose und/oder Polymethacrylate kurzkettiger (bevorzugt C₁-C₄) Alkohole eingesetzt werden. Zur Vermittlung einer geeigneten Viskosität kann der Siebdruckzusammensetzung ein organisches Lösungsmittel zugesetzt werden. Geeignet als organisches Lösungsmittel sind in diesem Zusammenhang Esteralkohole und Terpene wie alpha- oder beta-Terpineol oder Gemische davon mit anderen Lösungsmittel wie Kerosin, Dibutysebacate, Diethylenglykolbutylether, Diethylenglykolbutylether-acetat, Hexylenglycol, Dioctylsebazat, 2,2,4-Trimethyl-1,3-pentandiolmono-isobutyrat (Texanol) oder hochsiedende Alkohole, wie 2-(2-Butoxyethoxy)ethanol. Ein ganz besonders bevorzugtes Lösungsmittel für die erfindungsgemäße Siebdruckpastenzusammensetzung ist 2,2,4-Trimethyl-1,3-pentandiolmonoiso-butyrat.

Geeignete Weichmacher beinhalten insbesondere Phthalat-basierte Weichmacher, wie Dibutylphthalat oder Dioctylphthalat.

In einem weiteren Aspekt betrifft die vorliegende Erfindung ein Verfahren zur Herstellung einer elektrischen Leiteranordnung auf einem keramischen Substrat, wobei das Verfahren die Schritte
- Aufbringen einer Siebdruckpastenzusammensetzung, wie vorstehend beschrieben, auf das keramische Substrat und
- Trocknen und anschließendes Einbrennen der Siebdruckpastenzusammensetzung und Erzeugung einer elektrischen Leiteranordnung beinhaltet.

Das Aufbringen der Siebdruckpastenzusammensetzung erfolgt zweckmäßig unter Verwendung einer Siebdrucktechnik.

Das Trocknen im Rahmen dieses Verfahrens sollte zweckmäßig so durchgeführt werden, dass innerhalb des Trocknungsschrittes ein relevanter Anteil des Lösungsmittels aus der aufgebrachten Zusammensetzung entfernt wird. Für die Trocknung als geeignet hat sich insbesondere eine Temperatur von mehr als 60°C und insbesondere von mehr als 80°C erwiesen. Als geeigneter Zeitraum für die Trocknung können mindestens 30 Minuten und bevorzugt ein Bereich von etwa 60 bis 90 Minuten angegeben werden.

Als besonders geeignet hat sich ein Trocknungsprofil mit folgendem Verlauf erwiesen:
Die Temperatur der Trocknungsofen wird von Raumtemperatur auf 35°C erhöht und dort für 10 min gehalten. Anschließend wird die Temperatur auf 83°C erhöht und dort für 20 min gehalten. Anschließend wird die Temperatur auf 156°C erhöht und dort für 30 min gehalten.

Das anschließende Einbrennen der Siebdruckpastenzusammensetzung erfolgt bei einer Temperatur, bei der noch in der Siebdruckpastenzusammensetzung enthaltene organische Bestandteile zu gasförmigen Produkten zersetzt werden, so dass sich ein einheitlicher Verbund von Edelmetallpartikeln und Metalloxiden bildet. Zudem ist die Temperatur beim Einbrennen größer oder gleich dem Erweichungspunkt der Metalloxidmischung, so dass diese (zumindest partiell) aufschmilzt und die Poren und Zwischenräume der Edelmetallpartikel auffüllt; dadurch werden Oxidationsprozesse am Edelmetall bei erhöhter Temperatur unterdrückt.

Für das Einbrennen als geeignet kann eine Temperatur von mindestens 900°C, bevorzugt im Bereich von 1000 bis 1400°C und ganz besonders bevorzugt von etwa 1200°C (d.h. ± 100 °C und bevorzugt ± 50°C), angegeben werden.

Für das Einbrennen sind die Metalloxide vorzugsweise so ausgewählt, dass der Erweichungspunkt ihrer Mischung unterhalb der Temperatur liegt, bei der das Substrat gesintert wird. Im Rahmen einer bevorzugten Ausführungsform wird die getrocknete Siebdruckpastenzusammensetzung und das Substrat beim Einbrennen auf eine Temperatur größer oder gleich dem Erweichungspunkt der Metalloxidmischung und kleiner oder gleich der Sintertemperatur des Substrats erhitzt.

Die mit Siebdrucktechnik auf das keramische Substrat aufgebrachte Siebdruckpaste kann nach dem Einbrennen mit Hilfe eines Ultrakurzpulslasers strukturiert werden, um z.B. besonders feine Strukturen, scharfe Kanten oder Leiterbahnabstände von kleiner 100 µm zu realisieren.

Ein weiterer Aspekt der vorliegenden Erfindung betrifft ein Verbundprodukt umfassend ein keramisches Substrat und eine elektrische Leiteranordnung, die nach dem im Vorstehenden beschriebenen Verfahren erhältlich ist.

Alternativ dazu betrifft die vorliegende Erfindung auch ein Verbundprodukt, das ein keramisches Substrat und eine elektrische Leiteranordnung auf mindestens einer Seite des keramischen Substrats umfasst, wobei die elektrische Leiteranordnung auf partikulärem, bevorzugt sphärischem, Edelmetall, umfassend Platin und/oder Palladium, und Metalloxiden basiert, wobei der Anteil der Metalloxide 5 bis 15 Gew.-%, bezogen auf das Gewicht der elektrischen Leiteranordnung, ausmacht und wobei SiO₂, Al₂O₃ und BaO einen Anteil von mindestens 60 Gew.-% der metallischen Oxide in der elektrischen Leiteranordnung ausmachen.

Für dieses Verbundprodukt sind dieselben Vorgaben, die vorstehend im Zusammenhang mit dem erfindungsgemäßen Verfahren angegeben wurden, als bevorzugte Ausgestaltungen anzusehen. Insbesondere ist es demzufolge bevorzugt, wenn die Metalloxide in der elektrischen Leiteranordnung Siliziumoxid (SiO₂), Aluminiumoxid (Al₂O₃) und Bariumoxid (BaO) in einem Anteil von mindestens 70 Gew.-%, weiter bevorzugt mindestens 80 Gew.-% und noch weiter bevorzugt mindestens 90 Gew.-%, bezogen auf die Gesamtmenge der Metalloxide in der elektrischen Leiteranordnung, beinhalten.

Weiterhin ist es für dieses Verbundprodukt insbesondere bevorzugt, wenn die Metalloxide in der elektrischen Leiteranordnung SiO₂, Al₂O₃ und BaO mit einem Anteil von 35-41 Gew.-% SiO₂, 12-18 Gew.-% Al₂O₃ und 42-48 Gew.-% BaO, bezogen auf das Gesamtgewicht der Metalloxide in der elektrischen Leiteranordnung, umfassen und der Anteil aller weiteren oxidischen Komponenten an den Metalloxiden ≤ 2 Gew.-% ist.

Schließlich ist es für dieses Verbundprodukt insbesondere bevorzugt, wenn das partikuläre Edelmetall auf sphärischem Platin beruht, wobei ein Platinpulver mit den Eigenschaften: Platin Anteil: ≥ 99,7%, spezifische Oberfläche (BET): 0,8 - 1,2 m²/g, Partikelgrößenverteilung: D10: 0,2 - 0,5 µm, D50: 0,4 - 1,0 µm, D90: ≤ 2,5 µm und Pulverdichte: 9,0 - 11,5 g/cm³, als besonders geeignet angegeben werden kann.

Für alle vorstehend angegebenen Verbundprodukte ist es bevorzugt, wenn das keramische Substrat Aluminiumoxid umfasst oder aus diesem besteht.

Ein weiterer Aspekt der vorliegenden Erfindung betrifft einen Partikelsensor, der ein Verbundprodukt, wie vorstehend beschrieben, umfasst und wobei die elektrische Leiteranordnung mindestens zwei voneinander getrennte Elektroden aufweist. Für diese Elektroden ist es bevorzugt, wenn sie als zwei ineinandergreifende Kammelektroden vorliegen.

Zur Regeneration der Elektroden kann der erfindungsgemäße Partikelsensor weiterhin eine Heizvorrichtung aufweisen. Darüber hinaus kann der erfindungsgemäße Partikelsensor eine Temperaturmessvorrichtung aufweisen. Die Heizvorrichtung und/oder die Temperaturmessvorrichtung können dabei mittels Durchkontaktierungen durch eine oder mehrere Isolationsschichten und/oder Trägerschichten kontaktiert sein.

Ein weiterer Aspekt der vorliegenden Erfindung betrifft schließlich eine Heizvorrichtung, die ein Verbundprodukt, wie vorstehend beschrieben, umfasst.

Durch die im vorstehenden geschilderte Erfindung lassen sich insbesondere die folgenden Vorteile realisieren:
- Die Haftung der eingebrannten Edelmetallpaste auf Keramikträgern, insbesondere auf Al₂O₃, ist verbessert.
- Bei Hochtemperaturanwendung eines aus einer entsprechenden Edelmetallpaste hergestellten Sensors, wie zum Beispiel einem Rußsensor im Abgasstrang oder bei Heizern, wird die Wahrscheinlichkeit eines Abplatzens der Elektroden vom Substrat minimiert.
- Die Edelmetallpaste wird nach dem Einbrennen glatt und die Oberfläche hat metallischen Glanz, d.h., die aufgebrachte Schicht ist sehr kompakt und nicht porös. Damit hat die aufgebrachte Schicht eine hohe Leitfähigkeit und ist stabiler.
- Die hochschmelzende Metalloxidzusammensetzung führt bei Freibrenntemperaturen Rußpartikelfiltern (etwa 750°C) nicht zu einem Aufschmelzen der Edelmetall-Schicht.
- Der elektrische Widerstand der eingebrannten Paste bei verschiedenen Produktionsansätzen ist sehr gut reproduzierbar.

Im Weiteren wird die vorliegende Erfindung anhand einiger illustrierender Beispiele beschrieben, die jedoch nicht in irgendeiner Form als maßgeblich für den Schutzumfang der vorliegenden Anmeldung angesehen werden sollten.

### Beispiele

### Beispiel 1:

Es wurden Zusammensetzungen mit einem Platinpartikelgehalt im Bereich von 100 bis 85 Gew.-% und einem Gehalt an Glas-bildenden Metalloxiden im Bereich von 0 bis 15 Gew.-% (bezogen auf die Gesamtmenge an Metalloxiden und Platinpartikeln in der Zusammensetzung) auf ihre Haftung und elektrische Leitfähigkeit untersucht. Die Zusammensetzung der Glas-bildenden Metalloxide betrug 45 Gew% BaO, 38 Gew% SiO₂, 15 Gew% Al₂O₃ und 2 Gew% an weiteren oxidischen Komponenten. Dabei zeigte sich bei einem Gehalt an Glas-bildenden Metalloxiden von 15 Gew.-% eine sehr gute Haftung. Mit steigenden Gehalt an Glas-bildenden Metalloxiden nahm der Schichtwiderstand zu.

Bei anderen, auf dem gleichen Platin-Pulver basierenden Pasten (Tanaka TR-708EZ9 oder TR-708HSC) zeigte sich hingegen eine unzureichende Haftung in entsprechenden Haftungstests.

Die Ergebnisse dieser Untersuchungen sind in Tabelle 1 wiedergegeben:

**Tabelle 1:**

| Anteil glasbildender Metalloxide (Gew.-%) bezogen auf Feststoffanteil | Haftung | Elektrische Leitfähigkeit |
|---|---|---|
| 0 | - | ++++ |
| 5 | - | +++ |
| 10 | + | ++ |
| 15 | ++ | + |

### Beispiel 2:

Verschiedene Mischungen von Metalloxiden wurden mit einem Anteil von 12 Gew.-%, bezogen auf das Gesamtgewicht aus Platinpulver (wie in Beispiel 1 angegeben) und Glasbildenden Metalloxiden, zu Pasten formuliert. Die Pasten enthielten zusätzlich Ethylzellulose und Texanol als Binde- und Lösungsmittel in einem Anteil von ca. 15 Gew.-%.

Die Pasten wurden anschießend mit Hilfe von Siebdruck als Elektroden auf Aluminiumsubstrate aufgebracht, getrocknet und anschließend bei 1200°C eingebrannt.

Die so erzeugten Elektroden wurden bezüglich des elektrischen Widerstands und der thermischen Ausdehnung geprüft. Ebenfalls bewertet wurde die Verarbeitbarkeit der eingesetzten Paste. Die Ergebnisse dieser Untersuchungen sind in Tabelle 2 angegeben:

**Tabelle 2**

| Nr. | Glaszusammensetzung [wt%] | | | | | | |
|---|---|---|---|---|---|---|---|
| | BaO | SiO₂ | Al₂O₃ | Rest | EI. Wider - stand | therm. Ausdehnung | Verarbeitbarkeit |
| 1 | 45 | 38 | 15 | 2 | ++ | ++ | + |
| 2 | 42 | 36 | 20 | 2 | +++ | - | - |
| 3 | 48 | 40 | 10 | 2 | - | - | ++ |
| 4 | 41 | 43 | 14 | 2 | - | + | + |
| 5 | 49 | 33 | 16 | 2 | + | + | - |
| 6 | 50 | 34 | 14 | 2 | - | + | + |
| 7 | 40 | 42 | 16 | 2 | + | + | - |

| | | | | | | | |
|---|---|---|---|---|---|---|---|
| +, ++ und +++ bezeichnet für die Anwendung besonders geeignete Eigenschaften, -, -- undbezeichnen noch akzeptable bis unzureichende Eigenschaften | | | | | | | |

Die Zusammensetzung Nr. 1 lieferte die günstigste Kombination aus elektrischem Widerstand, thermischer Ausdehnung und Verarbeitbarkeit.

Mischungen, die in ihrer Zusammensetzung deutlich von den Zusammensetzungen gemäß Nrn. 1-7 abwichen, waren entweder nicht ausreichend gut schmelzbar, hatten einen zu geringen elektrischen Widerstand oder hatten einen für eine Anwendung als Rußsensor unzureichenden Schmelzpunkt.

## Patentansprüche

1. Siebdruckpastenzusammensetzung zur Herstellung einer elektrischen Leiteranordnung umfassend
- partikuläres Edelmetall, umfassend Platin und/oder Palladium,
- Metalloxide, und
- organische Binde- und/oder Lösungsmittel,
wobei der Anteil der Metalloxide in der Siebdruckpastenzusammensetzung von 5 bis 15 Gew.-%, bezogen auf die Gesamtmenge an Platin und Metalloxiden, beträgt und wobei SiO₂, Al₂O₃ und BaO einen Anteil von mindestens 60 Gew.-% der metallischen Oxide in der Siebdruckpastenzusammensetzung ausmachen.

2. Siebdruckpastenzusammensetzung nach Anspruch 1, **dadurch gekennzeichnet, dass** das partikuläre Edelmetall in Form von Platin und oder einer Platinlegierung, bevorzugt in Form von Platin, vorliegt.

3. Siebdruckpastenzusammensetzung nach Anspruch 2, **dadurch gekennzeichnet, dass** das partikuläre Platin in Form von sphärischem Platin in der Siebdruckpastenzusammensetzung vorliegt und bevorzugt auf einem Pt Pulver mit den Eigenschaften:
Platin Anteil: ≥ 99,7%
spezifische Oberfläche (BET): 0,8 - 1,2 m2/g
Partikelgrößenverteilung:
D10: 0,2 - 0,5 µm
D50: 0,4 - 1,0 µm
D90: ≤ 2,5 µm
Pulverdichte: 9,0 - 11,5 g/cm³,
basiert.

4. Siebdruckpastenzusammensetzung nach einem der Ansprüche 1 bis 3, **dadurch gekennzeichnet, dass** SiO₂, Al₂O₃ und BaO einen Anteil von mindestens 70 Gew.-%, bevorzugt mindestens 80 Gew.-% und weiter bevorzugt mindestens 90 Gew.-% der metallischen Oxide in der Siebdruckpastenzusammensetzung ausmachen.

5. Siebdruckpastenzusammensetzung nach einem der Ansprüche 1 bis 4, **dadurch gekennzeichnet, dass** die Metalloxide SiO₂, Al₂O₃ und BaO mit einem Anteil von 35-41 Gew.-% SiO₂, 12-18 Gew.-% Al₂O₃ und 42-48 Gew.-% BaO, bezogen auf das Gesamtgewicht der Metalloxide in der Siebdruckpastenzusammensetzung, umfassen, wobei der Gesamtanteil aller weiteren oxidischen Komponenten an den Metalloxiden in der Siebdruckpastenzusammensetzung ≤ 2 Gew.-% ist.

6. Siebdruckpastenzusammensetzung nach einem der Ansprüche 1 bis 5, **dadurch gekennzeichnet, dass** das organische Bindemittel Ethylzellulose und/oder als Lösungsmittel 2,2,4-Trimethyl-1,3-pentandiolmonoisobutyrat umfasst und bevorzugt aus diesen besteht.

7. Verfahren zur Herstellung einer elektrischen Leiteranordnung auf einem keramischen Substrat, umfassend die Schritte:
- Aufbringen einer Siebdruckpastenzusammensetzung nach einem der Ansprüche 1 bis 6 auf das keramische Substrat,
- Trocknen und anschließendes Einbrennen der Siebdruckpastenzusammensetzung unter Erzeugung einer elektrischen Leiteranordnung.

8. Verbundprodukt, umfassend ein keramisches Substrat und eine elektrische Leiteranordnung auf mindestens einer Seite des keramischen Substrats, wobei die elektrische Leiteranordnung auf partikulärem, bevorzugt sphärischem, Edelmetall, umfassend Platin und/oder Palladium und Metalloxiden basiert, wobei der Anteil der Metalloxide 5 bis 15 Gew.-%, bezogen auf das Gewicht der elektrischen Leiteranordnung, ausmacht und wobei SiO₂, Al₂O₃ und BaO einen Anteil von mindestens 60 Gew.-% der metallischen Oxide in der elektrischen Leiteranordnung ausmachen.

9. Verbundprodukt gemäß Anspruch 8, **dadurch gekennzeichnet, dass** das keramische Substrat Aluminiumoxid umfasst.

10. Verbundprodukt gemäß Anspruch 8 oder 9, **dadurch gekennzeichnet, dass** die Metalloxide in der elektrischen Leiteranordnung Siliziumoxid, Aluminiumoxid und Bariumoxid mit einem Anteil von mindestens 70 Gew.-% beinhalten, bevorzugt mindestens 80 Gew.-% und weiter bevorzugt mindestens 90 Gew.-% der metallischen Oxide in der elektrischen Leiteranordnung.

11. Verbundprodukt nach einem der Ansprüche 8 bis 10, **dadurch gekennzeichnet, dass** die Metalloxide in der elektrischen Leiteranordnung SiO₂, Al₂O₃ und BaO mit einem Anteil von 35-41 Gew.-% SiO₂, 12-18 Gew.-% Al₂O₃ und 42-48 Gew.-% BaO, bezogen auf das Gesamtgewicht der Metalloxide in der elektrischen Leiteranordnung, umfassen und der Anteil aller weiteren oxidischen Komponenten an den Metalloxiden kleiner gleich 2 Gew.-% ist.

12. Verbundprodukt nach einem der Ansprüche 8 bis 11, **dadurch gekennzeichnet, dass** das partikuläre Platin auf einem Pt Pulver mit den Eigenschaften:
Platin Anteil: ≥ 99,7%
spezifische Oberfläche (BET): 0,8 - 1,2 m2/g
Partikelgrößenverteilung:
D10: 0,2 - 0,5 µm
D50: 0,4 - 1,0 µm
D90: ≤ 2,5 µm
Pulverdichte: 9,0 - 11,5 g/cm³
basiert.

13. Partikelsensor, umfassend ein Verbundprodukt nach einem der Ansprüche 8 bis 12, wobei die elektrische Leiteranordnung mindestens zwei voneinander getrennte Elektroden, bevorzugt zwei ineinandergreifende Kammelektroden, aufweist.

14. Heizvorrichtung, umfassend ein Verbundprodukt gemäß einem der Ansprüche 8 bis 12.

## Claims

1. A screen-printing paste composition for producing an electrical conductor arrangement comprising
- particulate noble metal comprising platinum and/or palladium,
- metal oxides, and
- organic binding agents and/or solvents,
wherein the proportion of metal oxides in the screen-printing paste composition is from 5 to 15 wt.% relative to the total quantity of platinum and metal oxides, and wherein SiO₂, Al₂O₃, and BaO amount to a proportion of at least 60 wt.% of the metallic oxides in the screen-printing paste composition.

2. The screen-printing paste composition according to Claim 1, **characterized in that** the particulate noble metal is present in the form of platinum and/or a platinum alloy, preferably in the form of platinum.

3. The screen-printing paste composition according to Claim 2, **characterized in that** the particulate platinum is present in the form of spherical platinum in the screen-printing paste composition, and is preferably based on a Pt powder having the properties:
Platinum proportion: ≥ 99.7%
Specific surface area (BET): 0.8 - 1.2 m²/g
Particle size distribution:
D10: 0.2 - 0.5 µm
D50: 0.4 - 1.0 µm
D90: ≤ 2.5 µm
Powder density: 9.0 - 11.5 g/cm³

4. The screen-printing paste composition according to any of Claims 1 to 3, **characterized in that** SiO₂, Al₂O₃, and BaO amount to a proportion of at least 70 wt.%, preferably at least 80 wt.%, and more preferably at least 90 wt.% of the metallic oxides in the screen-printing paste composition.

5. The screen-printing paste composition according to any of Claims 1 to 4, **characterized in that** the metal oxides comprise SiO₂, Al₂O₃, and BaO with a proportion of 35-41 wt.% SiO₂, 12-18 wt.% Al₂O₃, and 42-48 wt.% BaO, relative to the total weight of the metal oxides in the screen-printing paste composition, wherein the total proportion of all other oxidic components in the metal oxides in the screen-printing paste composition is ≤ 2 wt.%.

6. The screen-printing paste composition according to any of Claims 1 to 5, **characterized in that** the organic binder comprises, and preferably consists of, ethyl cellulose and/or 2,2,4-trimethyl-1,3-pentanediol monoisobutyrate as solvent.

7. A method for producing an electrical conductor arrangement on a ceramic substrate, comprising the steps of:
- applying a screen-printing paste composition according to any one of Claims 1 to 6 to the ceramic substrate,
- drying and subsequently firing the screen-printing paste composition to produce an electrical conductor arrangement.

8. A composite product comprising a ceramic substrate and an electrical conductor arrangement on at least one side of the ceramic substrate, wherein the electrical conductor arrangement is based on particulate, preferably spherical, noble metal comprising platinum and/or palladium and metal oxides, wherein the proportion of the metal oxides amounts to 5 to 15 wt.% relative to the weight of the electrical conductor arrangement, and wherein SiO₂, Al₂O₃, and BaO amount to a proportion of at least 60 wt.% of the metallic oxides in the electrical conductor arrangement.

9. The composite product according to Claim 8, **characterized in that** the ceramic substrate comprises aluminum oxide.

10. The composite product according to Claims 8 or 9, **characterized in that** the metal oxides in the electrical conductor arrangement contain silicon oxide, aluminum oxide, and barium oxide in a proportion of at least 70 wt.%, preferably at least 80 wt.%, and more preferably at least 90 wt.% of the metallic oxides in the electrical conductor arrangement.

11. The composite product according to any of Claims 8 to 10, **characterized in that** the metal oxides in the electrical conductor arrangement comprise SiO₂, Al₂O₃, and BaO in a proportion of 35-41 wt.% SiO₂, 12-18 wt.% Al₂O₃, and 42-48 wt.% BaO, relative to the total weight of the metal oxides in the electrical conductor arrangement, and the proportion of all other oxidic components in the metal oxides is less than or equal to 2 wt.%.

12. The composite product according to any of Claims 8 to 11, **characterized in that** the particulate platinum is based on a Pt powder having the properties:
Platinum proportion: ≥ 99.7%
Specific surface area (BET): 0.8 - 1.2 m²/g
Particle size distribution:
D10: 0.2 - 0.5 µm
D50: 0.4 - 1.0 µm
D90: ≤ 2.5 µm
Powder density: 9.0-11.5 g/cm³

13. A particle sensor comprising a composite product according to any of Claims 8 to 12, wherein the electrical conductor arrangement has at least two electrodes separated from one another, preferably two interlocking comb electrodes.

14. A heating device comprising a composite product according to any of Claims 8 to 12.

## Revendications

1. Composition de pâtes de sérigraphie pour la fabrication d'un agencement de conducteurs électriques comprenant
- un métal précieux particulier, comprenant du platine et/ou du palladium,
- des oxydes métalliques et
- des liants et/ou solvants organiques,
la part d'oxydes métalliques de la composition de pâtes de sérigraphie étant de 5 % à 15 % en poids par rapport à la quantité totale de platine et d'oxydes métalliques et le SiO₂, l'Al₂O₃ et le BaO formant une part d'au moins 60 % en poids des oxydes métalliques dans la composition de pâtes de sérigraphie.

2. Composition de pâtes de sérigraphie selon la revendication 1, **caractérisée en ce que** le métal précieux particulier est présent sous forme de platine et/ou d'un alliage de platine, de préférence sous forme de platine.

3. Composition de pâtes de sérigraphie selon la revendication 2, **caractérisée en ce que** le platine particulier est présent sous forme de platine sphérique dans la composition de pâtes de sérigraphie et de préférence basé sur une poudre de Pt avec les propriétés :
part de platine : ≥ 99,7 %
surface spécifique (BET) : 0,8- 1,2 m²/g
distribution de tailles de particules :
D10 : 0,2 - 0,5 µm
D50: 0,4 - 1,0 µm
D90 : ≤ 2,5 µm
densité de poudre : 9,0 - 11,5 g/cm³.

4. Composition de pâtes de sérigraphie selon l'une quelconque des revendications 1 à 3, **caractérisée en ce que** le SiO₂, l'Al₂O₃ et le BaO forment une part d'au moins 70 % en poids, de préférence d'au moins 80 % en poids et plus préférablement d'au moins 90 % en poids des oxydes métalliques dans la composition de pâtes de sérigraphie.

5. Composition de pâtes de sérigraphie selon l'une quelconque des revendications 1 à 4, **caractérisée en ce qu'**elle comprend les oxydes métalliques SiO₂, Al₂O₃ et BaO dans une part de 35 à 41 % en poids de SiO₂, de 12 à 18 % en poids d'Al₂O₃ et de 42 à 48 % en poids de BaO, par rapport au poids total des oxydes métalliques dans la composition de pâtes de sérigraphie, la part totale de tous les autres composants de type oxyde aux oxydes métalliques dans la composition de pâtes de sérigraphie est de ≤ 2 % en poids.

6. Composition de pâtes de sérigraphie selon l'une quelconque des revendications 1 à 5, **caractérisée en ce que** le liant organique comprend de la cellulose d'éthyle et/ou comprend comme solvant du monoisobutyrate de 2,2,4-triméthyl-1,3-pentanediol et est de préférence composé de celui-ci.

7. Procédé pour la fabrication d'un agencement de conducteurs électriques sur un substrat céramique, comprenant les étapes de :
- application d'une composition de pâtes de sérigraphie selon l'une quelconque des revendications 1 à 6 sur le substrat céramique,
- séchage et cuisson ultérieure de la composition de pâtes de sérigraphie en générant un agencement de conducteurs électriques.

8. Produit composite, comprenant un substrat céramique et un agencement de conducteurs électriques sur au moins un côté du substrat céramique, l'agencement de conducteurs électriques étant basé sur un métal précieux particulier, de préférence sphérique, comprenant du platine et/ou du palladium et sur des oxydes métalliques, la part des oxydes métalliques formant 5 à 15 % en poids par rapport au poids de l'agencement de conducteurs électriques et du SiO₂, de l'Al₂O₃ et du BaO formant une part d'au moins 60 % en poids des oxydes métalliques dans l'agencement de conducteurs électriques.

9. Produit composite selon la revendication 8, **caractérisé en ce que** le substrat céramique comprend de l'oxyde d'aluminium.

10. Produit composite selon la revendication 8 ou 9, **caractérisé en ce que** les oxydes métalliques dans l'agencement de conducteurs électriques contiennent de l'oxyde de silicium, de l'oxyde d'aluminium et de l'oxyde de baryum dans une part d'au moins 70 % en poids, de préférence d'au moins 80 % en poids et plus préférablement d'au moins 90 % en poids des oxydes métalliques dans l'agencement de conducteurs électriques.

11. Produit composite selon l'une quelconque des revendications 8 à 10, **caractérisé en ce que** les oxydes métalliques dans l'agencement de conducteurs électriques comprennent du SiO₂, de l'Al₂O₃ et du BaO dans une part de 35 à 41 % en poids de SiO₂, de 12 à 18 % en poids d'Al₂O₃ et de 42 à 48 % en poids de BaO, par rapport au poids total des oxydes métalliques dans l'agencement de conducteurs électriques et la part totale de tous les autres composants de type oxyde aux oxydes métalliques est inférieure égale à 2 % en poids.

12. Produit composite selon l'une quelconque des revendications 8 à 11, **caractérisé en ce que** le platine particulier est basé sur une poudre de Pt avec les propriétés :
part de platine : ≥ 99,7 %
surface spécifique (BET) : 0,8 - 1,2 m²/g
distribution de tailles de particules :
D10 : 0,2 - 0,5 µm
D50: 0,4 - 1,0 µm
D90 : ≤ 2,5 µm
densité de poudre : 9,0 - 11,5 g/cm³.

13. Capteur de particules, comprenant un produit composite selon l'une quelconque des revendications 8 à 12, l'agencement de conducteurs électriques présentant au moins deux électrodes séparées l'une de l'autre, de préférence deux électrodes collectrices entrant en prise l'une avec l'autre.

14. Dispositif de chauffage, comprenant un produit composite selon l'une quelconque des revendications 8 à 12.
